# EUROPÄISCHE PATENTSCHRIFT

(11) **EP 3 636 374 B1**
(45) Veröffentlichungstag und Bekanntmachung des Hinweises auf die Patenterteilung: **15.09.2021**
(21) Anmeldenummer: 19188399.0
(22) Anmeldetag: 25.07.2019
(51) Int. Cl.: B23F 5/16, B23F 17/00, B23F 23/12

(54) **VERZAHNMASCHINE UND VERFAHREN ZUR HERSTELLUNG EINES VERZAHNTEN WERKSTÜCKS**
GEAR CUTTING MACHINE AND METHOD OF MAKING A TOOTHED WORKPIECE
MACHINE À TAILLER ET PROCÉDÉ DE FABRICATION D'UNE PIÈCE DENTÉE

(30) Priorität: 11.10.2018 DE 102018125213
(43) Veröffentlichungstag der Anmeldung: 15.04.2020
(73) Patentinhaber: Liebherr-Verzahntechnik GmbH, 87437 Kempten (DE)
(72) Erfinder: Weixler, Johannes, 87471 Durach (DE)
(74) Vertreter: Behr, Wolfgang

(56) Entgegenhaltungen:
- EP-A1- 0 516 596
- WO-A1-2009/121387
- DD-A1- 231 751
- DE-A1-102006 001 026
- DE-A1-102012 020 210
- DE-U- 6 800 602
- DE-U1- 8 810 536
- US-A- 5 634 250
- US-A1- 2012 121 353

## Beschreibung

Die vorliegende Erfindung betrifft eine Verzahnmaschine gemäß dem Oberbegriff des unabhängigen Anspruchs 1 und ein Verfahren zur Herstellung mindestens eines verzahnten Werkstücks gemäß dem Oberbegriff des unabhängigen Anspruchs 11, sowie die Verwendung einer Verzahnmaschine in einem Verfahren zur Herstellung mindestens eines verzahnten Werkstücks. Eine derartige Verzahnmaschine und ein derartiges Verfahren sind aus dem Dokument US 5 634 250 bekannt.

Die Verwendung eines Gegenhalters ist insbesondere bei einer Fräsbearbeitung aufgrund der hohen Kräfte, welche auf das Werkzeug wirken, in den meisten Fällen notwendig, um die benötigte Stabilität zu gewährleisten.

Aus der nicht vorveröffentlichten Druckschrift DE 10 2017 003 648 der gleichen Anmelderin ist es bekannt, in der gleichen Werkzeugaufnahme ein Fräswerkzeug und ein Wälzschälwerkzeug einzuspannen. Das Wälzschälwerkzeug kann dabei zu Feinbearbeitung der durch das Fräswerkzeug erzeugten Verzahnung oder zur Erzeugung einer weiteren, durch das Fräswerkzeug nicht herstellbaren Verzahnung am gleichen Werkstück dienen. Um Störkonturen zu vermeiden, wird ein besonders schlanker Gegenhalter eingesetzt.

Aus Druckschriften DE 68 00 602 U, DE 10 2006 001026 A1, DE 88 10 536 U1, DE 10 2012 020210 A1, WO 2009/121387 A1 und EP 516 596 A1 sind Verzahnmaschinen mit beidseitig eingespannten Werkzeugen bekannt, bei welchen der Gegenhalter über eine Bewegungsachse aus seiner Arbeitsstellung in eine inaktive Stellung beweglich ist und/oder lösbar verbindbar an dem Bearbeitungskopf der Verzahnmaschine angeordnet ist, um das Werkzeug leichter wechseln zu können. Druckschrift US 5,634,250 A zeigt eine Verzahnfräsmaschine gemäß dem Oberbegriff von Anspruch 1.

Aufgabe der vorliegenden Erfindung ist es, eine verbesserte Verzahnmaschine und ein verbessertes Verfahren zur Verfügung zu stellen.

Diese Aufgabe wird durch eine Verzahnmaschine gemäß Anspruch 1 und ein Verfahren gemäß Anspruch 11 gelöst.

Bevorzugte Ausgestaltungen der vorliegenden Erfindung sind Gegenstand der Unteransprüche.

Die vorliegenden Erfindung umfasst eine Verzahnmaschine mit einer Werkstückaufnahme und einer Werkzeugaufnahme, welche jeweils durch einen Antrieb in Rotation versetzbar sind, wobei die Werkzeugaufnahme an einem Bearbeitungskopf angeordnet ist, welcher über eine oder mehrere Bewegungsachsen der Verzahnmaschine relativ zur Werkstückaufnahme verfahrbar ist, um ein in der Werkstückaufnahme aufgenommenes Werkstück durch ein in der Werkzeugaufnahme aufgenommenes Werkzeug verzahnzubearbeiten, wobei die Werkzeugaufnahme einen Gegenhalter aufweist. Erfindungsgemäß ist vorgesehen, dass der Gegenhalter über eine Bewegungsachse aus seiner Arbeitsstellung in eine inaktive Stellung beweglich ist und/oder lösbar verbindbar an dem Bearbeitungskopf der Verzahnmaschine angeordnet ist.

In einer ersten Variante der vorliegenden Erfindung ist der Gegenhalter über eine Bewegungsachse aus seiner Arbeitsstellung in eine inaktive Stellung beweglich an dem Bearbeitungskopf angeordnet. Hierdurch kann der Gegenhalter bei Bearbeitungsschritten und/oder Bearbeitungsmodi, in welchen er nicht benötigt wird, in seine inaktive Stellung bewegt werden, um den zur Verfügung stehenden Arbeitsraum zu vergrößern und/oder die durch den Gegenhalter gebildete Störkontur zu verringern.

In einer möglichen Ausgestaltung weist der Bearbeitungskopf einen Antrieb auf, durch welchen der Gegenhalter aus seiner Arbeitsstellung in die inaktive Stellung beweglich ist. Alternativ kann der Gegenhalter jedoch auch manuell beweglich sein. In einer zweiten Variante der vorliegenden Erfindung ist der Gegenhalter ist der Gegenhalter lösbar verbindbar an dem Bearbeitungskopf der Verzahnmaschine angeordnet. Hierdurch kann der Gegenhalter bei Bearbeitungsschritten und/oder Bearbeitungsmodi, in welchen er nicht benötigt wird, demontiert werden, um den zur Verfügung stehenden Arbeitsraum zu vergrößern und/oder die durch den Gegenhalter gebildete Störkontur zu verringern.

Erfindungsgemäß weist die Verzahnmaschine eine Steuerung auf, welche eine Funktion zur Durchführung eines Verfahrens aufweist, bei welchem in einem ersten Bearbeitungsschritt und/oder Bearbeitungsmodus ein Werkstück mittels eines ersten Werkzeuges, welches zwischen einer Werkzeugaufnahme und dem Gegenhalter eingespannt ist, bearbeitet wird, und wobei in einem zweiten Bearbeitungsschritt und/oder Bearbeitungsmodus ein Werkstück mittels eines zweiten Werkzeuges, welches einseitig in der Werkzeugaufnahme eingespannt ist, bearbeitet wird, wobei sich der Gegenhalter während des zweiten Bearbeitungsschritts in einer inaktiven Stellung befindet oder von dem Bearbeitungskopf abmontiert ist. Dabei ist vorgesehen, dass das Werkstück in einem der Bearbeitungsschritte und/oder Bearbeitungsmodi durch Fräsen bearbeitet wird und wobei das Werkstück in dem anderen Bearbeitungsschritt und/oder Bearbeitungsmodus durch Wälzschälen bearbeitet wird, und/oder der erste Bearbeitungsschritt und/oder Bearbeitungsmodus mit einem ersten Achskreuzwinkel zwischen Werkzeug und Werkstück erfolgt und der zweite Bearbeitungsschritt und/oder Bearbeitungsmodus mit einem zweiten Achskreuzwinkel zwischen Werkzeug und Werkstück erfolgt, wobei die Differenz zwischen dem ersten und dem zweiten Achskreuzwinkel mehr als 45° beträgt, bevorzugt mehr als 70°, und wobei die Differenz zwischen dem ersten und dem zweiten Achskreuzwinkel weniger als 135° beträgt, bevorzugt weniger als 110°, weiter bevorzugt weniger als 100°.

In einer möglichen Ausführungsform der vorliegenden Erfindung ist der Gegenhalter beweglich und/oder lösbar verbindbar an einem Schlitten einer Linearachse angeordnet, über welche er in Achsrichtung der Werkzeugaufnahme gegenüber dieser verschieblich ist. Eine solche Linearachse ist üblicherweise vorgesehen, um das Werkzeug ein- und ausspannen zu können und/oder um die Position des Gegenhalters an unterschiedlich lange Werkzeuge anzupassen.

Bevorzugt erfolgt die Bewegung des Gegenhalters in seine inaktive Position daher nicht über diese Linearachse, sondern durch eine zusätzliche Achse, über welche der Gegenhalter an dem Schlitten angeordnet ist.

In einer möglichen Ausführungsform der vorliegenden Erfindung ist der Gegenhalter verschwenkbar an dem Bearbeitungskopf der Verzahnmaschine angeordnet. Insbesondere ist er verschwenkbar an dem Schlitten der oben genannten Linearachse angeordnet.

Bevorzugt ist der Gegenhalter durch das Verschwenken aus seiner Arbeitsstellung in die inaktive Stellung ein- oder wegklappbar.

In einer ersten möglichen Ausführungsform der vorliegenden Erfindung ist der Gegenhalter über eine Schwenk-Achse verschwenkbar, welche in einer Ebene verläuft, die senkrecht auf der Achsrichtung der Werkzeugaufnahme steht. Hierdurch ergibt sich eine besonders kompakte und stabile Anordnung.

Bevorzugt ist der Gegenhalter in Richtung auf die Werkzeugaufnahme einklappbar. Dies hat zur Folge, dass er sich in der Arbeitsstellung auf einem Anschlag abstützen kann, welcher eine Schwenkbewegung von der Werkzeugaufnahme weg verhindert.

In einer zweiten möglichen Ausführungsform der vorliegenden Erfindung ist der Gegenhalter über eine Schwenk-Achse verschwenkbar, welche parallel zur Achsrichtung der Werkzeugaufnahme verläuft. Hierdurch kann der Gegenhalter seitlich weggeklappt werden, wenn er nicht benötigt wird.

In einer möglichen Ausführungsform der vorliegenden Erfindung weisen alle Elemente des Gegenhalters und seiner Lagerung in der inaktiven Stellung des Gegenhalters einen vorgegebenen lichten Abstand zur Achse der Werkzeugaufnahme auf. In axialer Verlängerung der Werkzeugaufnahme bildet der Gegenhalter in der inaktiven Stellung daher keine Störkontur mehr.

Bevorzugt weisen in der inaktiven Stellung des Gegenhalters alle Störkonturen am Bearbeitungskopf ausgehend von der Werkzeugaufnahme in Achsrichtung einen vorgegebenen lichten Abstand zur Achse der Werkzeugaufnahme auf. Es existieren daher in axialer Verlängerung der Werkzeugaufnahme überhaupt keine Störkonturen mehr am Bearbeitungskopf.

Bevorzugt entspricht der lichte Abstand mindestens dem maximal zulässigen Radius, mit welchem ein Werkzeug noch in der Werkzeugaufnahme einspannbar ist.

In einer möglichen Ausführungsform der vorliegenden Erfindung ist der Gegenhalter in seiner inaktiven Stellung in einer Aufnahmeöffnung des Bearbeitungskopfes aufgenommen. Hierdurch wird der Gegenhalter in der inaktiven Stellung vor Beschädigungen und/oder Schmutz geschützt.

Insbesondere kann der Gegenhalter in eine Aufnahmeöffnung des Bearbeitungskopfes einklappbar sein.

Bevorzugt verschließt der Gegenhalter in seiner inaktiven Stellung die Aufnahmeöffnung. Der Gegenhalter kann hierfür eine Verschlussplatte aufweisen.

In einer möglichen Ausgestaltung ist der Gegenhalter in der Aufnahmeöffnung gelagert.

Bevorzugt ist der Gegenhalter so am Bearbeitungskopf angeordnet und/oder so mit diesem verbindbar, dass er bei einer Bewegung von der inaktiven Stellung in die Arbeitsstellung bzw. bei einer Montage am Bearbeitungskopf nicht neu justiert werden braucht.

In einer möglichen Ausführungsform der vorliegenden Erfindung stützt sich der Gegenhalter in seiner Arbeitsstellung auf einem Anschlagelement ab. Insbesondere kann der Gegenhalter gegen ein solches Anschlagelement geschwenkt werden. Dieses definiert daher die Arbeitsstellung.

In einer möglichen Ausführungsform der vorliegenden Erfindung weist das Anschlagselement Kegelbolzen und/oder Kegelbolzenaufnahmen auf. Insbesondere wirken diese mit entsprechenden Kegelbolzenaufnahmen und/oder Kegelbolzen am Gegenhalter zusammen. Hierdurch wird die Genauigkeit bei der Positionierung des Gegenhalters erhöht.

In einer möglichen Ausführungsform der vorliegenden Erfindung ist der Gegenhalter in seiner Arbeitsstellung hydraulisch verspannbar. Hierdurch wird die Genauigkeit bei der Positionierung des Gegenhalters erhöht.

In einer möglichen Ausführungsform der vorliegenden Erfindung ist der Gegenhalter über ein Schnellspannsystem lösbar mit dem Bearbeitungskopf verbindbar.

Insbesondere handelt es sich bei dem Schnellspannsystem um ein Nullpunktspannsystem. Hierdurch kann die Position des Gegenhalters ohne Justagearbeiten exakt reproduziert werden.

In einer möglichen Ausführungsform der vorliegenden Erfindung weist das Schnellspannsystem Kegelbolzen und/oder Kegelbolzenaufnahmen auf. Hierdurch wird die Genauigkeit bei der Positionierung des Gegenhalters erhöht.

In einer möglichen Ausführungsform der vorliegenden Erfindung umfasst die Verzahnmaschine einen automatischen Werkzeugwechsler. Dieser erlaubt ein schnelles Wechseln des eingesetzten Werkzeugs.

In einer möglichen Ausführungsform der vorliegenden Erfindung umfasst die Verzahnmaschine eine Steuerung, welche eine Funktion zur Durchführung eines Verfahrens aufweist, wie es im folgenden beschrieben wird. Bevorzugt führt die Steuerung das Verfahren dabei automatisch durch.

Die vorliegende Erfindung umfasst ein Verfahren gemäß Anspruch 11 zur Herstellung mindestens eines verzahnten Werkstücks, wobei in einem ersten Bearbeitungsschritt und/oder Bearbeitungsmodus ein Werkstück mittels eines ersten Werkzeuges, welches zwischen einer Werkzeugaufnahme und einem Gegenhalter eingespannt ist, bearbeitet wird, und wobei in einem zweiten Bearbeitungsschritt und/oder Bearbeitungsmodus ein Werkstück mittels eines zweiten Werkzeuges, welches einseitig in der Werkzeugaufnahme eingespannt ist, bearbeitet wird, wobei sich der Gegenhalter während des zweiten Bearbeitungsschritts in einer inaktiven Stellung befindet oder von dem Bearbeitungskopf abmontiert ist.

Insbesondere kann das Verfahren unter Verwendung einer Verzahnmaschine erfolgen, wie sie oben näher beschrieben wurde.

Gemäß einer ersten Variante der vorliegenden Erfindung wird das Werkstück in einem der Bearbeitungsschritte und/oder Bearbeitungsmodi durch Fräsen bearbeitet. In dem anderen Bearbeitungsschritt und/oder Bearbeitungsmodus wird das Werkstück durch Wälzschälen bearbeitet. Bei diesen beiden Bearbeitungsverfahren kann es häufig vorkommen, dass das eine einen Gegenhalter erforderlich macht, welcher bei dem anderen stört.

Insbesondere kann in der ersten Variante das Werkstück in dem ersten Bearbeitungsschritt und/oder Bearbeitungsmodus durch Fräsen bearbeitet werden. Alternativ kann das Werkstück in dem ersten Bearbeitungsschritt und/oder Bearbeitungsmodus durch Wälzschälen bearbeitet werden.

Gemäß einer zweiten Variante der vorliegenden Erfindung erfolgt der erste Bearbeitungsschritt und/oder Bearbeitungsmodus mit einem ersten Achskreuzwinkel zwischen Werkzeug und Werkstück und der zweite Bearbeitungsschritt und/oder Bearbeitungsmodus mit einem zweiten Achskreuzwinkel zwischen Werkzeug und Werkstück, wobei die Differenz zwischen dem ersten und dem zweiten Achskreuzwinkel mehr als 45° und weniger als 135° beträgt. Hierdurch bildet der Gegenhalter häufig in zumindest einem der Bearbeitungsschritte oder Bearbeitungsmodi eine Störkontur. Insbesondere kann die Differenz zwischen dem ersten und dem zweiten Achskreuzwinkel mehr als 70° betragen.

Bevorzugt beträgt die Differenz zwischen dem ersten und dem zweiten Achskreuzwinkel weniger als 110°, weiter bevorzugt weniger als 100°.

In einer möglichen Ausführungsform der vorliegenden Erfindung werden der erste und der zweite Bearbeitungsschritt und/oder Bearbeitungsmodus zur Bearbeitung des gleichen Werkstückes eingesetzt. Insbesondere kann das gleiche Werkstück in zwei aufeinanderfolgenden Bearbeitungsschritten durch unterschiedliche Werkzeuge bearbeitet werden.

In einer möglichen Ausführungsform der vorliegenden Erfindung werden der erste und der zweite Bearbeitungsschritt und/oder Bearbeitungsmodus dagegen zur Bearbeitung unterschiedlicher Werkstücke eingesetzt. Die erfindungsgemäße Verzahnmaschine erhöht hierbei die Flexibilität bei der Herstellung unterschiedlicher Werkstücke durch unterschiedliche Werkzeuge.

In einer möglichen Ausführungsform der vorliegenden Erfindung werden der erste und der zweite Bearbeitungsschritt zur Bearbeitung zweier unterschiedlicher Verzahnungen eines Werkstückes eingesetzt. Bevorzugt wird hierbei eine Fräsbearbeitung zur Bearbeitung einer ersten Verzahnung und eine Wälzschälbearbeitung zur Bearbeitung einer zweiten Verzahnung durchgeführt.

In einer möglichen Ausführungsform der vorliegenden Erfindung weist die erste Verzahnung einen größeren Durchmesser auf als die zweite Verzahnung und/oder bildet eine Störkontur für die zweite Verzahnung.

In einer möglichen Ausführungsform der vorliegenden Erfindung handelt es sich bei den Verzahnungen um Stirnradverzahnungen.

In einer möglichen Ausführungsform der vorliegenden Erfindung werden der erste und der zweite Bearbeitungsschritt nacheinander zur Bearbeitung der gleichen Verzahnung eines Werkstückes eingesetzt.

Insbesondere kann zunächst eine Schruppbearbeitung und darauffolgend eine Schlichtbearbeitung durchgeführt werden. Bevorzugt wird hierbei eine Fräsbearbeitung zur Schruppbearbeitung und eine Wälzschälbearbeitung zur Schlichtbearbeitung durchgeführt.

In einer möglichen Ausführungsform der vorliegenden Erfindung handelt es sich bei der Verzahnung um eine Schneckenverzahnung, insbesondere eine Schneckenverzahnung eines Antriebselementes eines Lenkantriebs eines Fahrzeugs.

In den durch die vorliegende Erfindung durchgeführten Bearbeitungsschritten und/oder Bearbeitungsmodi kann eine Weichbearbeitung oder eine Hart-Feinbearbeitung des Werkstücks durchgeführt werden.

Die Bearbeitungsschritte und/oder Bearbeitungsmodi können zur Bearbeitung eines Rohteils oder eines gehärteten Werkstücks eingesetzt werden.

Insbesondere kann im Rahmen des ersten und/oder zweiten Bearbeitungsschritts und/oder Bearbeitungsmodus eine Erzeugung einer Verzahnung an einem Rohteil erfolgen. Der Begriff "Bearbeitung einer Verzahnung" umfasst daher erfindungsgemäß auch die Erzeugung einer Verzahnung an einem zuvor unverzahnten Werkstück.

Die vorliegende Erfindung wird nun anhand von Ausführungsbeispielen und Zeichnungen näher beschrieben.

Dabei zeigen:
- Fig. 1:: ein erstes Ausführungsbeispiel einer erfindungsgemäßen Verzahnmaschine in einem ersten Bearbeitungsschritt und/oder Bearbeitungsmodus, in welchem der Gegenhalter sich in seiner Arbeitsstellung befindet und ein Werkzeug zwischen Werkzeugaufnahme und Gegenhalter eingespannt ist,
- Fig. 2:: das in Figur 1 dargestellte Ausführungsbeispiel, wobei der Gegenhalter von dem Werkezeug weggefahren wurde,
- Fig. 3:: das in Figuren 1 und 2 dargestellte Ausführungsbeispiel, wobei der Gegenhalter in seine inaktive Stellung bewegt und insbesondere eingeklappt wird,
- Fig. 4:: das in Figuren 1 bis 3 dargestellte Ausführungsbeispiel, wobei der Gegenhalter sich in der inaktiven Stellung befindet und insbesondere eingeklappt ist,
- Fig. 5:: das in Figuren 1 bis 4 dargestellte Ausführungsbeispiel, wobei der Gegenhalter sich in der inaktiven Stellung befindet und ein Werkzeug einseitig an der Werkzeugaufnahme eingespannt ist,
- Fig. 6:: ein erster Schritt eines ersten Ausführungsbeispiels eines erfindungsgemäßen Verfahrens, bei welchem eine erste Verzahnung eines Werkstückes über ein zweiseitig eingespanntes Werkzeug bearbeitet wird,
- Fig. 7:: ein zweiter Schritt des ersten Ausführungsbeispiels eines erfindungsgemäßen Verfahrens, bei welchem eine zweite Verzahnung des gleichen Werkstücks über ein einseitig eingespanntes Werkzeug bearbeitet wird, wobei sich der Gegenhalter in der inaktiven Stellung befindet,
- Fig. 8:: ein zweites Ausführungsbeispiel eines erfindungsgemäßen Verfahrens, bei welchem ein Werkstück in einem zweiten Bearbeitungsmodus durch ein einseitig eingespanntes Werkzeug bearbeitet wird, wobei sich der Gegenhalter in der inaktiven Stellung befindet,
- Fig. 9:: einen ersten Schritt eines dritten Ausführungsbeispiels eines erfindungsgemäßen Verfahrens, bei welchem eine Verzahnung eines Werkstückes über ein einseitig eingespanntes erstes Werkzeug bearbeitet wird, wobei sich der Gegenhalter in der inaktiven Stellung befindet,
- Fig. 10:: einen zweiten Schritt des dritten Ausführungsbeispiels eines erfindungsgemäßen Verfahrens, bei welchem die gleiche Verzahnung des Werkstücks über ein zweites, ebenfalls einseitig eingespanntes Werkzeug bearbeitet wird, wobei sich der Gegenhalter in der inaktiven Stellung befindet, und
- Fig. 11:: einen alternativen zweiten Schritt des dritten Ausführungsbeispiels eines erfindungsgemäßen Verfahrens, bei welchem die gleiche Verzahnung durch eines oder mehrere zweite Werkzeuge, welche zweiseitig eingespannt sind, bearbeitet wird.

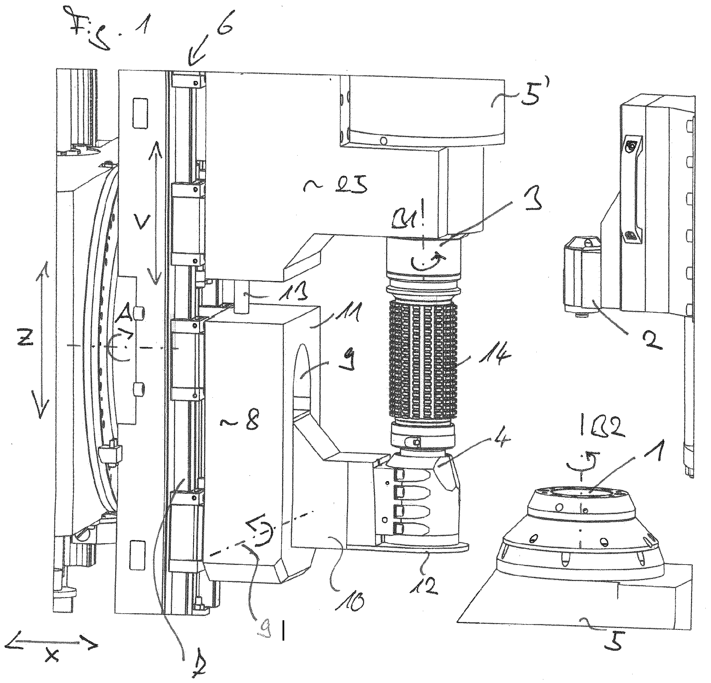

Fig. 1 zeigt ein Ausführungsbeispiel einer erfindungsgemäßen Verzahnmaschine mit einer Werkstückaufnahme 1 und einer Werkzeugaufnahme 3, welche jeweils durch einen nur schematisch dargestellten Antrieb 5 bzw. 5' um die jeweiligen Drehachsen B2 und B1 in Rotation versetzbar sind. Die Werkzeugaufnahme 3 ist an einem Bearbeitungskopf 6 der Verzahnmaschine angeordnet, welcher über mehrere Bewegungsachsen relativ zur Werkstückaufnahme 1 verfahrbar ist, um ein in der Werkstückaufnahme aufgenommenes Werkstück durch ein in der Werkzeugaufnahme 3 aufgenommenes Werkzeug 14 verzahnzubearbeiten.

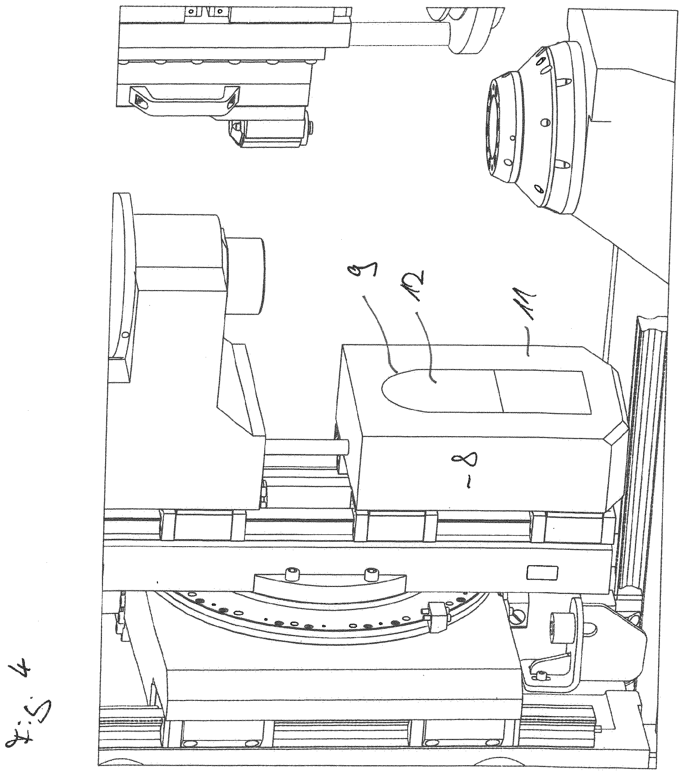

Die Werkzeugaufnahme 3 weist einen Gegenhalter 4 auf, welcher erfindungsgemäß über eine Bewegungsachse so an dem Bearbeitungskopf angeordnet ist, dass er von einer Arbeitsstellung, wie sie in Fig. 1 gezeigt ist und in welcher der Gegenhalter mit der Werkzeugaufnahme 3 fluchtet, in eine inaktive Stellung bewegbar ist, wie sie in Fig. 4 gezeigt ist und in welcher der Gegenhalter nicht mehr mit der Werkzeugaufnahme 3 fluchtet, sondern sich seitlich neben die Drehachse B1 befindet.

Im Ausführungsbeispiel ist der Gegenhalter hierfür um eine Schwenkachse 4 verschwenbar an dem Bearbeitungskopf 6 angeordnet und hierdurch ein- und ausklappbar ausgestaltet.

Das Bewegen des Gegenhalters von der Arbeitsstellung in die inaktive Stellung, d.h. bei dem in Fig. 1 gezeigten Ausführungsbeispiel das Ein- und Ausklappen des Gegenhalters, kann entweder durch einen Antrieb der Verzahnmaschine, oder per Hand erfolgen.

Im Ausführungsbeispiel ist der Gegenhalter 4 dabei um eine Schwenkachse 9 verschwenkbar, welche in einer Ebene verläuft, die senkrecht auf der Drehachse B1 der Werkzeugaufnahme 3 steht. Figur 1 zeigt den Gegenhalter 4 dabei in der ausgeklappten Stellung, wobei das Werkzeug 14 zwischen der Werkzeugaufnahme 3 und dem ausgeklappten Gegenhalter 4 eingespannt ist.

Der Gegenhalter 4 ist dabei verschwenkbar an einem ersten Schlitten 8 angeordnet, welcher an einer Linearachse 7 geführt ist, über welche der Abstand des Gegenhalters 4 zur Werkzeugaufnahme 3 veränderlich ist. Hierfür ist der Schlitten 8 entlang der Linearachse 7 parallel zur Drehachse B1 der Werkzeugaufnahme 3 verschieblich. Im Ausführungsbeispiel ist eine Gewindestange 13 vorgesehen, durch deren Drehposition der Abstand zwischen der Werkzeugaufnahme 3 und dem Gegenhalter 4 veränderlich ist.

Der erste Schlitten 8 weist eine Aufnahme 9 auf, in welcher der Gegenhalter 4 um die Schwenkachse 91 gelagert ist und in welche der Gegenhalter beim Einklappen versenkt wird.

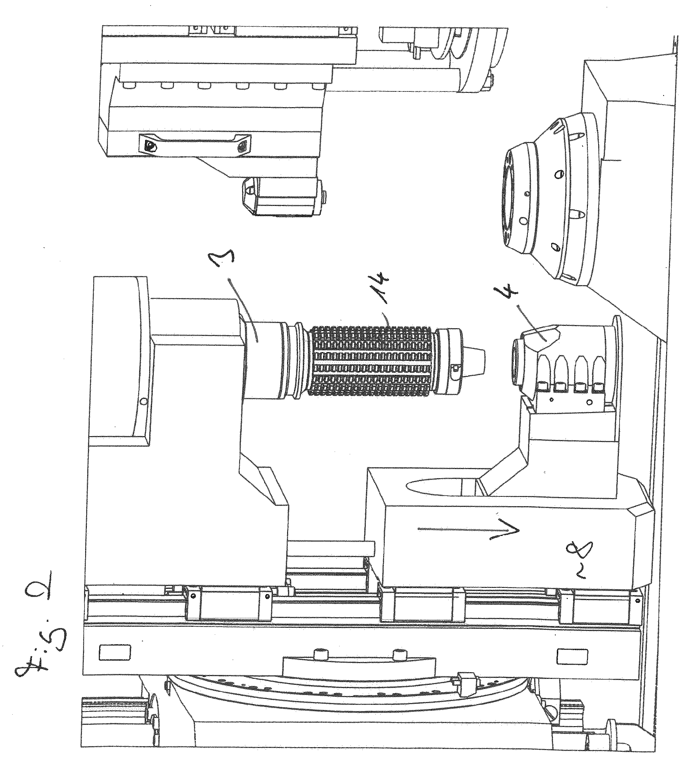

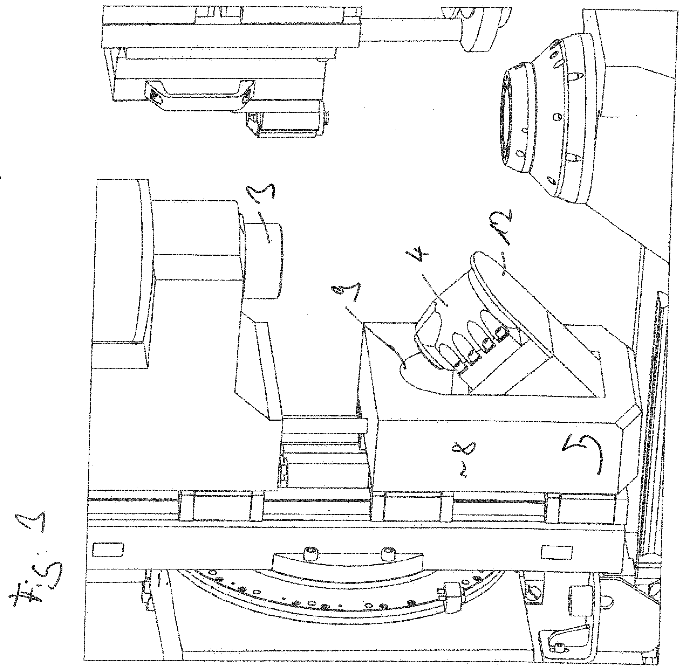

Zum Bewegen des Gegenhalters 4 von der in Fig. 1 gezeigten Arbeitsposition in die inaktive Position wird dieser zunächst mit Figur 2 dargestellt über die Linearachse 7 von der Werkzeugaufnahme 3 in axialer Richtung weg verfahren. Daraufhin wird, wie in Figur 3 dargestellt, der Gegenhalter 4 - gegebenenfalls nach Entfernen des Werkzeugs 14 - in Richtung auf die Werkzeugaufnahme 3 eingeklappt. Die inaktive Stellung des Gegenhalters 4 ist dann in Figur 4 dargestellt. Wie aus Figur 4 ersichtlich, befindet sich der Gegenhalter in der inaktiven Stellung komplett innerhalb der Aufnahme 9 des ersten Schlittens 8.

Der Gegenhalter 4 umfasst einen Gegenhalterarm 10, über welchen er in der Aufnahme 9 gelagert ist. In der ausgeklappten Stellung fluchtet hierdurch die Rotationsachse des Gegenhalters 4 mit der Rotationsachse B1 der Werkzeugaufnahme 3. In der eingeklappten Stellung weist der Gegenhalter dagegen einen lichten Abstand zu der Rotationsachse B1 des Gegenhalters auf, und stellt hierdurch keine Störkontur für ein einseitig eingespanntes Werkzeug dar. Der lichte Abstand des eingeklappten Gegenhalters ist bevorzugt größer als der maximale Radius eines in der Werkzeugaufnahme 3 aufnehmbaren Werkzeugs, weiter bevorzugt größer als der 1,2-fache Wert des maximalen Radius eines in der Werkzeugaufnahme aufnehmbaren Werkzeugs.

Der Gegenhalter 4 weist weiterhin eine Verschlussplatte 12 auf, durch welche die Öffnung 9 im Schlitten 8 in der eingeklappten Stellung verschlossen wird. Hierdurch wird der Gegenhalter in der eingeklappten Stellung vor Verschmutzungen geschützt.

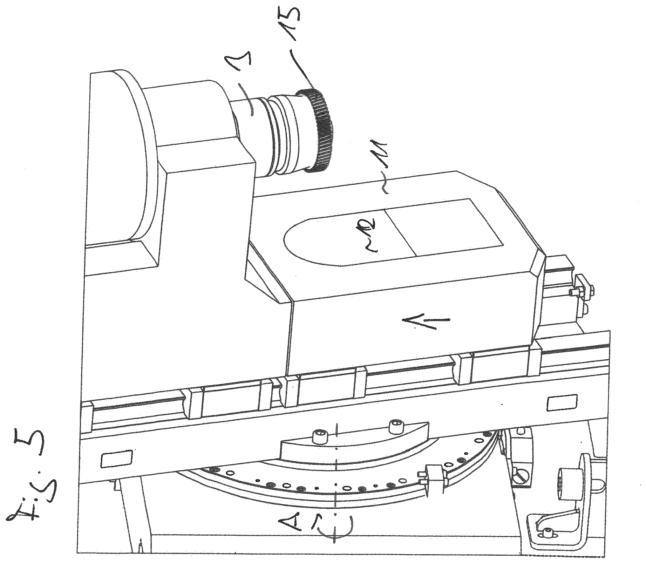

Wie in Figur 5 gezeigt kann in der inaktiven Stellung des Gegenhalters ein Werkzeug 15 einseitig in der Werkzeugaufnahme 3 eingespannt werden, ohne dass der Gegenhalter eine Störkontur für die Bearbeitung eines Werkstücks mit dem einseitig eingespannten Werkzeug darstellen würde. Insbesondere sind hierdurch in axialer Richtung in Verlängerung des Werkzeuges keinerlei Störkonturen am Bearbeitungskopf vorhanden. Wie in Figur 5 dargestellt kann der Gegenhalter bzw. der Schlitten 8 bei eingeklapptem Gegenhalter zusätzlich in Richtung auf die Werkzeugaufnahme 3 verfahren werden, sodass sich eine nochmals kompaktere Anordnung ergibt.

In der Arbeitsstellung des Gegenhalters stützt sich dieser bevorzugt auf einen Anschlag ab, welcher im Ausführungsbeispiel bevorzugt an den ersten Schlitten 8, und insbesondere innerhalb der Ausnehmung 9, angeordnet ist. Der Anschlag ist so ausgestaltet, dass die Arbeitsstellung des Gegenhalters 4 ohne eine Justage exakt reproduzierbar ist. Beispielsweise kann der Anschlag hierfür Kegelbolzen und/oder Kegelbolzenaufnahmen aufweisen, welche mit einem entsprechenden Gegenstück am Gegenhalterarm 10 des Gegenhalters zusammenwirken. Hierdurch kann auf eine Justage der Position des Gegenhalters bei einem Wechsel zwischen der inaktiven Stellung und der Arbeitsstellung verzichtet werden.

In einer möglichen Ausgestaltung wird der Gegenhalter in der Arbeitsstellung hydraulisch verspannt, um diese exakt zu reproduzieren.

In einer alternativen, nicht dargestellten Ausführungsform kann der Gegenhalter auch um eine Schwenkachse, die parallel zur Drehachse B1 der Werkzeugaufnahme 3 verläuft, verschwenkbar sein. Wird der Gegenhalter nicht benötigt, kann er so seitlich aus dem Arbeitsbereich herausgeklappt werden. Auch in diesem Fall ist der Gegenhalter bevorzugt an dem ersten Schlitten 8, wie er im Ausführungsbeispiel gezeigt ist, schwenkbar angeordnet.

In einem weiteren, nicht dargestellten alternativen Ausführungsbeispiel ist der Gegenhalter 4 über ein Schnellspannsystem lösbar mit dem ersten Schlitten 8 verbindbar

Wird der Gegenhalter nicht benötigt, kann er hierdurch einfach demontiert werden. Wird er wieder benötigt, wird er über das Schnellspannsystem montiert. Bei dem Schnellspannsystem handelt es sich dabei um ein Nullpunktspannsystem, welches eine exakte Reproduzierbarkeit der Position des Gegenhalters gegenüber dem Schlitten 8 erlaubt, ohne dass eine Justage des Gegenhalters am Schlitten 8 notwendig wäre. Auch bei einer solchen Ausgestaltung kann die Verzahnmaschine mit zwei unterschiedlichen Betriebsmodi einmal mit Gegenhalter und einmal ohne Gegenhalter für die Werkzeugaufnahme betrieben werden.

Im Folgenden werden nun Merkmale des in Fig. 1 bis 5 gezeigten Ausführungsbeispiels der erfindungsgemäßen Verzahnmaschine beschrieben, welche einzeln oder in Kombination bei jeder erfindungsgemäßen Verzahnmaschine verwirklicht sein können, und zwar in Kombination mit jeder beliebigen erfindungsgemäßen Ausgestaltung des Gegenhalters:
Der Bearbeitungskopf 6, an welchem die Werkzeugaufnahme 3 und der Gegenhalter 4 angeordnet sind, ist über eine Schwenkachse A verschwenkbar, über welche der Achskreuzwinkel zwischen der Drehachse B1 der Werkzeugaufnahme 3 und der Drehachse B2 der Werkstückaufnahme 1 einstellbar ist. Die Schwenkachse A verläuft bevorzugt senkrecht zu den beiden Drehachsen B1 und B2.

Der Bearbeitungskopf 6 ist über eine Linearachse Z in einer Richtung parallel zur Drehachse B2 der Werkstückaufnahme 1 verfahrbar. Hierdurch kann ein in der Werkzeugaufnahme 3 aufgenommenes Werkzeug entlang der Werkstückbreite verfahren werden.

Der Bearbeitungskopf ist über eine Linearachse X verfahrbar, um den Achsabstand zwischen den Drehachsen B1 und B2 einzustellen. Die Linearachse X verläuft bevorzugt senkrecht zu den beiden Drehachsen B1 und B2 und/oder parallel zur Schwenkachse A.

Der Bearbeitungskopf weist eine Linearachse V auf, über welche die Werkzeugaufnahme 3 zusammen mit dem Gegenhalter 4 in einer Richtung parallel zur Drehachse B1 der Werkzeugaufnahme 3 verfahrbar ist. Die Linearachse V wird auch als Schift-Achse bezeichnet, und ist über die Schwenkachse A verschwenkbar.

Im Ausführungsbeispiel wird die Linearachse V über die Linearachse 7 bereitgestellt, mittels welcher auch der Abstand zwischen der Werkzeugaufnahme 3 und dem Gegenhalter 4 verändert werden kann. Hierfür ist auch die Werkzeugaufnahme 3 auf einem zweiten Schlitten montiert, welcher entlang der Linearachse 7 verfahrbar ist. Dabei ist ein nicht dargestellter Antrieb vorgesehen, über welchen der zweite Schlitten zusammen mit dem ersten Schlitten 8 entlang der Achse 7 verfahrbar ist. Die Werkzeugaufnahme 3 ist an einem Tragarm 25 des zweiten Schlittens beabstandet von der Linearachse 7 angeordnet.

Bei den Bewegungsachsen der Verzahnmaschine handelt es sich bevorzugt um NC-Achsen. Insbesondere handelt es sich bei den beiden Drehachsen B1 und B2 um NC-Achsen, so dass eine Wälzkopplung der beiden Achsen über eine Steuerung der Verzahnmaschine erfolgen kann.

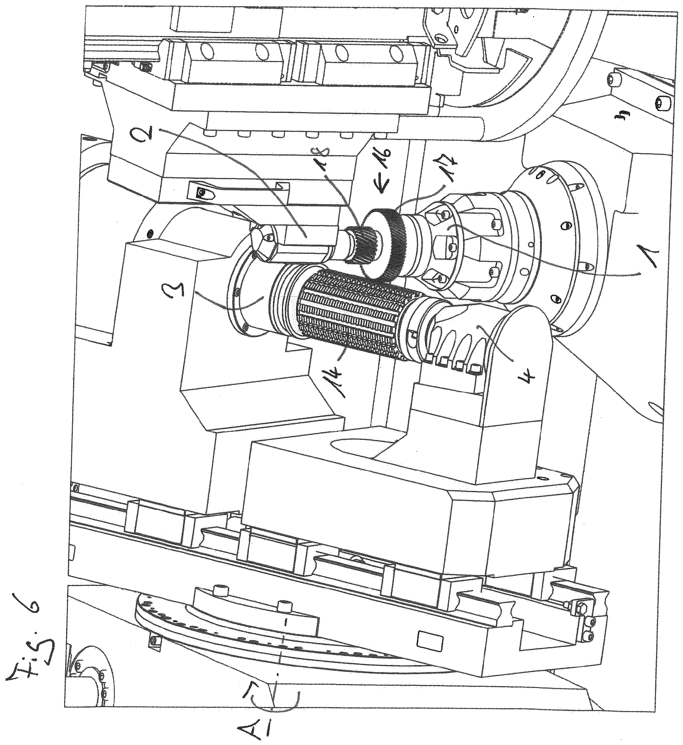

Die Werkstückaufnahme 1 weist ebenfalls einen Gegenhalter 2 auf, welcher über eine weitere Linearachse in Achsrichtung der Drehachse B2 verfahrbar ist, um den Abstand zwischen Gegenhalter 2 und Werkzeugaufnahme 1 zu verändern. Einsatzmöglichkeiten der erfindungsgemäßen Verzahnmaschine sowie Ausführungsbeispiele erfindungsgemäßer Verfahren werden im Folgenden anhand der Figuren 6 bis 11 näher beschrieben.

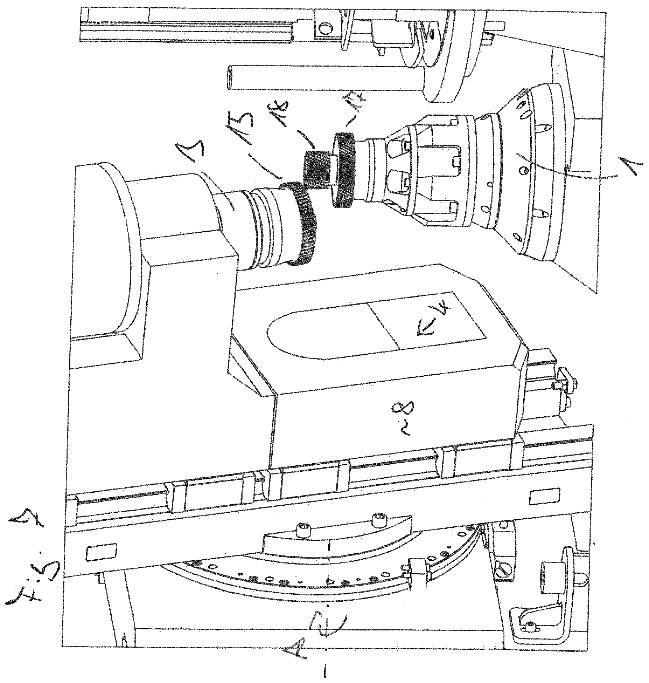

Figuren 6 und 7 zeigen einen ersten und zweiten Bearbeitungsschritt eines ersten Ausführungsbeispiels eines erfindungsgemäßen Verfahrens. Bei dem in Figur 6 dargestellten ersten Bearbeitungsschritt ist ein Werkzeug 14 beidseitig zwischen der Werkzeugaufnahme 3 und dem Gegenhalter 4 eingespannt, wofür sich der Gegenhalter 4 in der Arbeitsstellung befindet. Bei dem in Figur 7 dargestellten zweiten Bearbeitungsschritt des Verfahrens ist dagegen ein zweites Werkzeug 15 einseitig an der Werkzeugaufnahme 3 eingespannt, und der Gegenhalter 4 befindet sich in der inaktiven Stellung, um keine Störkontur zu bilden.

Bei dem in Figuren 6 und 7 dargestellten ersten Ausführungsbeispiel eines Verfahrens werden die beiden Werkzeuge 14 und 15 dazu eingesetzt, um dasselbe Werkstück 16 zu bearbeiten. Die beiden Werkzeuge bearbeiten jedoch zwei unterschiedliche Verzahnungen 17 und 18 des Werkstückes 16. Unter Bearbeiten im Sinne der vorliegenden Erfindung wird dabei auch eine Erzeugung der Verzahnung aus einem Rohling verstanden. Das Verfahren dient zur Erzeugung von Stirnverzahnungen 17 und 18 an dem Werkstück 16. Dabei kann es sich um Geradverzahnungen oder Schrägverzahnungen handeln.

Im Ausführungsbeispiel erfolgt der erste Bearbeitungsschritt in Figur 6 unter Verwendung eines Fräsers 14, über welchen die erste Verzahnung 17 des Werkstücks 16 erzeugt wird. Im Ausführungsbeispiel wird ein Wälzfräser 14 eingesetzt, und die Verzahnung 17 daher durch Wälzfräsen erzeugt. Der Gegenhalter 4 befindet sich in der Arbeitsstellung, so dass der Fräser zweiseitig eingespannt werden kann. Durch den relativ großen Achskreuzwinkel stellt der Gegenhalter keine relevante Störkontur dar.

Bei dem in Figur 7 dargestellten zweiten Bearbeitungsschritt wird dagegen ein Wälzschälwerkzeug 15 eingesetzt, und die zweite Verzahnung 18 des Werkstücks 16 daher durch Wälzschälen erzeugt. Das Wälzschälen hat den Vorteil, dass hierdurch auch schwer zugängliche Verzahnungen, welche neben Störkonturen liegen, erzeugt werden können.

Bei dem im Ausführungsbeispiel dargestellten Werkstück 16 bildet die erste Verzahnung 17 durch ihre größeren Durchmesser eine solche Störkontur für die zweite Verzahnung 18. Durch den Einsatz sowohl eines Fräsers 14 als auch eines Wälzschälwerkzeugs 15 können dennoch beide Verzahnungen erzeugt werden.

Durch den relativ kleinen Achskreuzwinkel beim Wälzschälen der gezeigten Stirnradverzahnungen würde der Gegenhalter 4 jedoch eine Störkontur bilden, da er bei der Bearbeitung des Werkstücks mit der Werkstückaufnahme kollidieren würde. Das Verschwenken in die inaktive Position ermöglicht das Wälzschälen. Aufgrund der beim Wälzschälen gegenüber dem Wälzfräsen geringeren Kräfte reicht die einseitige Einspannung des Wälzschälwerkzeugs aus.

Durch das Einklappen des Gegenhalters 4 im zweiten Bearbeitungsschritt wird daher vermieden, dass dieser für das Wälzschälen eine Störkontur bildet. Hierdurch können beide Verzahnungen auf der gleichen Maschine in aufeinanderfolgenden Bearbeitungsschritten erzeugt werden.

Bei dem in Figur 6 dargestellten ersten Bearbeitungsschritt ist das Werkstück 16 beidseitig zwischen der Werkstückaufnahme 1 und dem Gegenhalter 2 der Werkstückaufnahme eingespannt. Für den zweiten, in Figur 7 dargestellten Bearbeitungsschritt kann das Werkstück entweder zweiseitig eingespannt verbleiben, oder der Gegenhalter 2 wird zur Vermeidung von Störkonturen nach oben aus dem Arbeitsraum wegverfahren.

Die Reihenfolge der Bearbeitungsschritte ist beim ersten Ausführungsbeispiel unerheblich. Die Bezeichnungen erster und zweiter Bearbeitungsschritt werden daher nur zur Unterscheidung zwischen den Bearbeitungsschritten herangezogen, und bezeichnen daher nicht die zeitliche Reihenfolge.

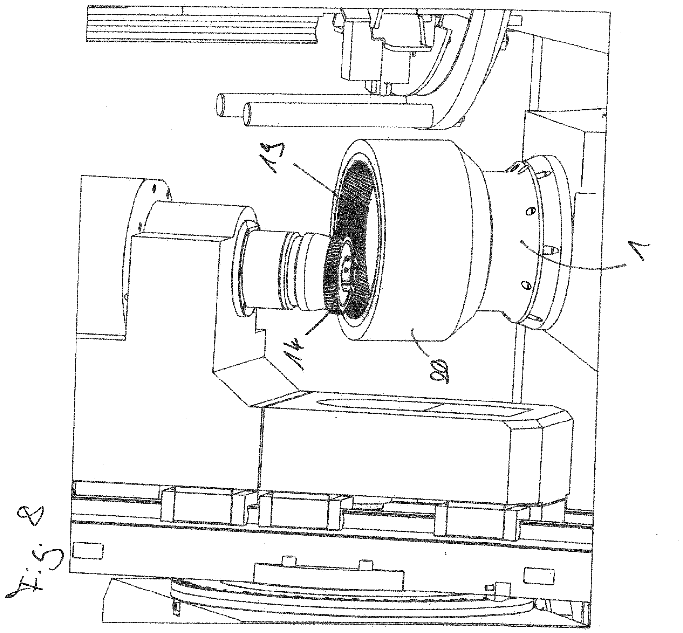

Figur 8 zeigt eine weitere Einsatzmöglichkeit der erfindungsgemäßen Verzahnmaschine. Dabei wird die Verzahnmaschine in einem Bearbeitungsmodus eingesetzt, bei welchem das Werkzeug 14 nur einseitig in der Werkzeugaufnahme 3 eingespannt und der Gegenhalter 4 sich in der inaktiven Stellung befindet. Bei dem in Figur 8 dargestellten Ausführungsbeispiel wird eine Innenverzahnung 19 bearbeitet und insbesondere aus einem Rohling erzeugt. Auch hier kommt ein Wälzschälverfahren zum Einsatz.

Das Werkstück mit der Innenverzahnung 19 ist im Ausführungsbeispiel über einen Spanntropf 20 an der Werkstückaufnahme 1 eingespannt. Der Gegenhalter der Werkzeugaufnahme 1 wurde hierfür nach oben aus dem Arbeitsraum wegverfahren und/oder entfernt.

Durch den erfindungsgemäßen Gegenhalter 4 kann daher eine Fräsmaschine, welche in einem ersten Bearbeitungsmodus zum Fräsen, insbesondere zum Wälzfräsen von Außenverzahnungen durch ein zweiseitig eingespanntes Werkzeug genutzt wird, mit einem zweiten Bearbeitungsmodus auch zum Wälzschälen von Innenverzahnungen eingesetzt werden.

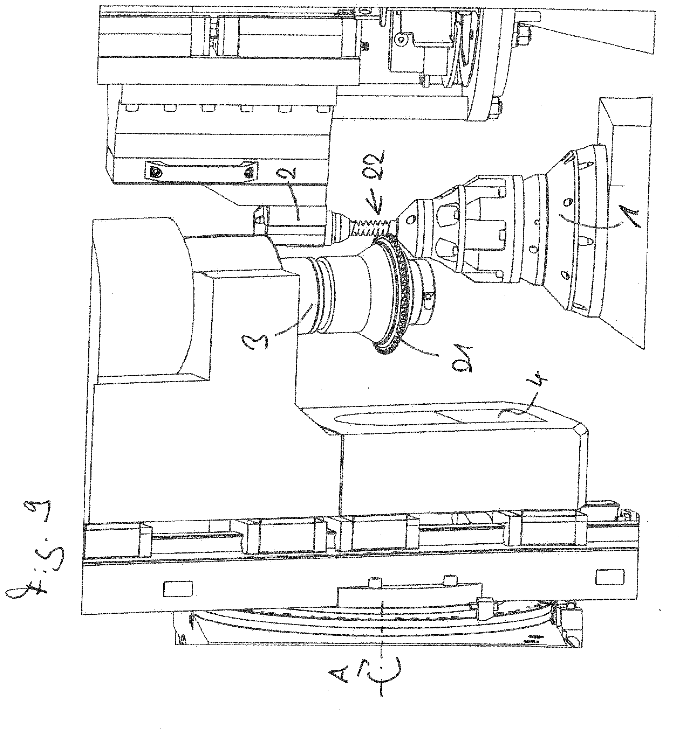

In Figuren 9 bis 11 ist ein drittes Ausführungsbespiel eines erfindungsgemäßen Verfahrens dargestellt. Das Verfahren dient zur Erzeugung einer Schneckenverzahnung 22 eines in der Werkstückaufnahme 1 eingespannten Werkstücks. Das Werkstück ist in diesem Ausführungsbeispiel zweiseitig zwischen der Werkstückaufnahme 1 und dem Gegenhalter 2 eingespannt.

Figur 9 zeigt einen ersten Bearbeitungsschritt, bei welchem die Schneckenverzahnung 22 durch ein Fräswerkzeug 21 erzeugt wird. Aufgrund des relativ kleinen Achskreuzwinkels, welcher zur Erzeugung der Schneckenverzahnung beim Fräsen notwendig ist, wird das Fräswerkzeug 21 nur einseitig in der Werkzeugaufnahme 3 eingespannt und der Gegenhalter 4 eingeklappt, um keine Störkontur mit der Werkstückaufnahme 1 zu bilden.

Bei dem Fräswerkzeug 21 handelt es sich im Ausführungsbeispiel um eine Frässcheibe mit entlang des Umfangs angeordneten Fräszähnen. Die Drehbewegung der Werkzeugaufnahme muss daher nicht mit der Drehbewegung der Werkstückaufnahme synchronisiert werden, da keine wälzende Bearbeitung erfolgt.

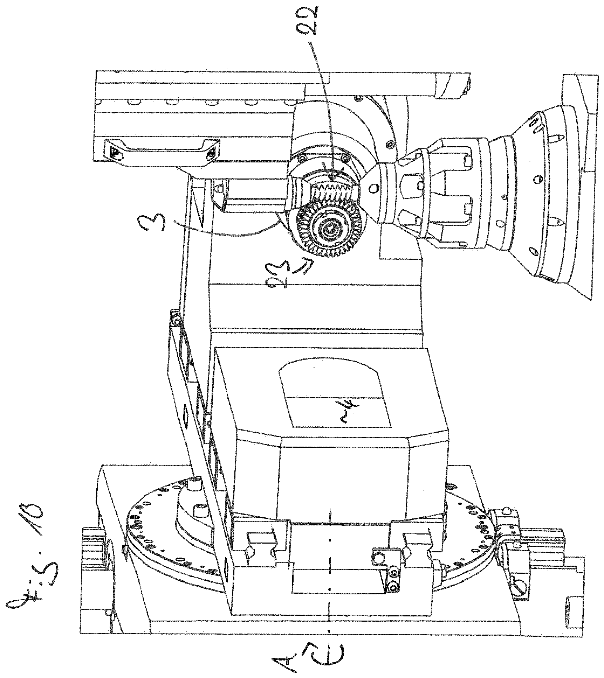

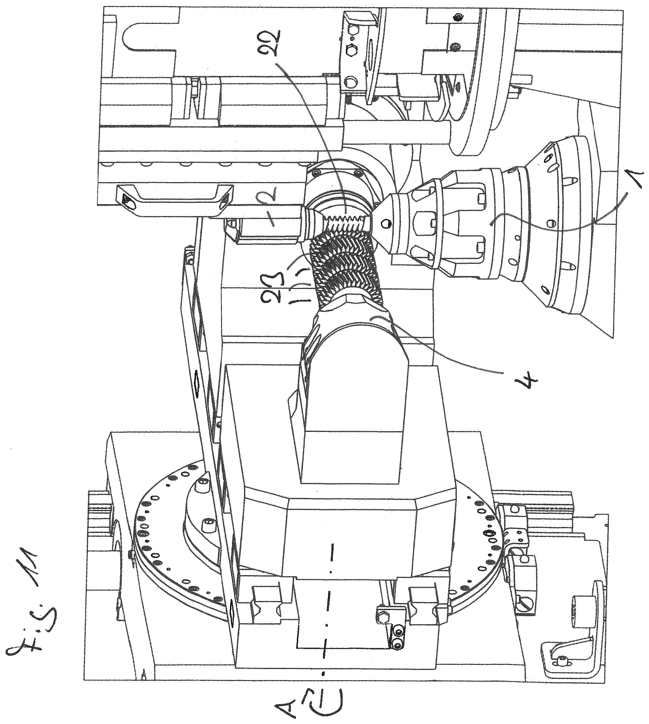

In Figuren 10 und 11 sind zwei alternative Ausgestaltungen eines zweiten Bearbeitungsschrittes dargestellt, bei welchem die im ersten Bearbeitungsschritt erzeugte Verzahnung durch ein anderes Werkzeug weiter bearbeitet wird. Insbesondere werden dabei eine oder mehrere Wälzschälwerkzeuge 23 eingesetzt, sodass der zweite Bearbeitungsschritt durch Wälzschälen erfolgt. Dies ermöglicht eine erhebliche Verbesserung der Oberflächengüte der im ersten Bearbeitungsschritt gefrästen Schneckenverzahnung.

Bei dem in Figur 10 dargestellten Ausführungsbeispiel ist das Wälzschälwerkzeug 23 lediglich einseitig an der Werkzeugaufnahme 3 eingespannt und der Gegenhalter 4 daher eingeklappt.

Bei der in Figur 11 dargestellten alternativen Ausgestaltung des zweiten Bearbeitungsschritts ist das Wälzschälzeug 23 dagegen zweiseitig zwischen der Werkzeugaufnahme 3 und dem ausgeklappten Gegenhalter 4 eingespannt. Die hierdurch gewonnene Stabilität ermöglicht es beispielsweise, mehrere Werkzeuge 23 gemeinsam in Axialrichtung nebeneinander in der Werkzeugaufnahme einzuspannen. Die Werkzeuge 23 können entweder identisch ausgeführt sein und lediglich aus Verschleißgründen mehrfach vorgesehen sein, oder unterschiedlich ausgeführt und für aufeinanderfolgende Bearbeitungsschritte der gleichen Verzahnung oder für die Bearbeitung unterschiedlicher Verzahnungen eingesetzt werden. Der Einsatz eines Gegenhalters zum Einspannen der Werkzeuge ist möglich, da sich für das Schneckengewinde beim Wälzschälen ein großer Achskreuzwinkel ergibt. Sämtliche Ausführungsbeispiele der erfindungsgemäßen Verfahren sind dadurch gekennzeichnet, dass zwischen den beiden Bearbeitungsschritten bzw. Bearbeitungsmodi der Achskreuzwinkel über die Schwenkachse A verändert wird. Bei dem Bearbeitungsschritt mit dem kleineren Achskreuzwinkel wird der Gegenhalter 4 in die inaktive Position bewegt, um keine Störkontur mit der Werkstückaufnahme 1 zu bilden. Bei dem Bearbeitungsschritt mit dem größeren Achskreuzwinkel kann der Gegenhalter 4 dagegen in die Arbeitsposition bewegt und zum Einspannen des Werkzeugs eingesetzt werden, da er ohnehin nicht in Konflikt mit der Werkstückaufnahme 1 gerät.

Die erfindungsgemäße Verzahnmaschine kann, wie beim ersten und dritten Ausführungsbeispiel eines erfindungsgemäßen Verfahrens gezeigt, in aufeinanderfolgenden Bearbeitungsschritten zur Bearbeitung eines einzigen Werkstückes, welches zwischen den Bearbeitungsschritten in der Werkstückaufnahme eingespannt bleibt, eingesetzt werden.

Die erfindungsgemäße Verzahnmaschine kann jedoch auch zur Bearbeitung unterschiedlicher Werkstücke in entsprechend unterschiedlichen Bearbeitungsmodi eingesetzt werden. In einem ersten Bearbeitungsmodus kann mit ausgeklapptem Gegenhalter und zweiseitig eingespanntem Werkzeug ein erstes Werkstück bearbeitet werden, während der zweite Bearbeitungsmodus zur Bearbeitung eines oder mehrerer zweiter Werkstücke mit eingeklapptem Gegenhalter und einseitig eingespanntem Werkzeug eingesetzt wird.

Die erfindungsgemäße Verzahnmaschine lässt sich durch das Ein- und Ausklappen bzw. das Montieren und Demontieren des Gegenhalters leicht für die beiden Betriebsmodi umrüsten. Die Bearbeitungsmodi können dabei in gleicher Weise durchgeführt werden, wie dies oben für die Bearbeitungsschritte beschrieben wurde.

Sämtliche oben beschriebenen Merkmale der Bearbeitungsschritte und/oder Bearbeitungsmodi können auch bei einer anderen kinematischen Ausgestaltung der Bewegbarkeit des Gegenhalters und/oder einer Demontierbarkeit des Gegenhalters eingesetzt werden.

Der Gegenhalter 2 der Werkstückaufnahme könnte in einer möglichen Ausgestaltung der vorliegenden Erfindung in gleicher Weise wie der Gegenhalter 4 der Werkzeugaufnahme von einer Arbeitsstellung in eine inaktive Stellung bewegbar bzw. lösbar verbindbar ausgestaltet sein. Dabei könnte die gleiche konstruktive Ausgestaltung gewählt werden wie für den Gegenhalter 4 der Werkzeugaufnahme gewählt werden.

Für die meisten Anwendungen reicht es jedoch aus, den Gegenhalter 2 entlang der ohnehin vorhandenen Linearachse, über welche der axiale Abstand zwischen Werkstückaufnahme 2 und Gegenhalter 4 verändert werden kann, aus dem Arbeitsraum heraus zu verfahren, um Störkonturen bei der Bearbeitung zu vermeiden.

## Patentansprüche

1. Verzahnmaschine mit einer Werkstückaufnahme (1) und einer Werkzeugaufnahme (3), welche jeweils durch einen Antrieb (5, 5') in Rotation versetzbar sind, wobei die Werkzeugaufnahme (3) an einem Bearbeitungskopf (6) angeordnet ist, welcher über eine oder mehrere Bewegungsachsen der Verzahnmaschine relativ zur Werkstückaufnahme (1) verfahrbar ist, um ein in der Werkstückaufnahme (1) aufgenommenes Werkstück durch ein in der Werkzeugaufnahme (3) aufgenommenes Werkzeug (14, 15) verzahnzubearbeiten, wobei die Werkzeugaufnahme (3) einen Gegenhalter (4) aufweist, wobei der Gegenhalter (4) über eine Bewegungsachse (91) aus seiner Arbeitsstellung in eine inaktive Stellung beweglich ist und/oder lösbar verbindbar an dem Bearbeitungskopf (6) der Verzahnmaschine angeordnet ist,
und mit einer Steuerung, welche eine Funktion zur Durchführung eines Verfahrens aufweist, bei welchem in einem ersten Bearbeitungsschritt und/oder Bearbeitungsmodus ein Werkstück mittels eines ersten Werkzeuges (14), welches zwischen einer Werkzeugaufnahme (3) und dem Gegenhalter (4) eingespannt ist, bearbeitet wird, und wobei in einem zweiten Bearbeitungsschritt und/oder Bearbeitungsmodus ein Werkstück mittels eines zweiten Werkzeuges (15), welches einseitig in der Werkzeugaufnahme eingespannt ist, bearbeitet wird, wobei sich der Gegenhalter (4) während des zweiten Bearbeitungsschritts in einer inaktiven Stellung befindet oder von dem Bearbeitungskopf (6) abmontiert ist,
**dadurch gekennzeichnet,**
**dass** das Werkstück in einem der Bearbeitungsschritte und/oder Bearbeitungsmodi durch Fräsen bearbeitet wird und wobei das Werkstück in dem anderen Bearbeitungsschritt und/oder Bearbeitungsmodus durch Wälzschälen bearbeitet wird, und/oder
**dass** der erste Bearbeitungsschritt und/oder Bearbeitungsmodus mit einem ersten Achskreuzwinkel zwischen Werkzeug (14) und Werkstück erfolgt und der zweite Bearbeitungsschritt und/oder Bearbeitungsmodus mit einem zweiten Achskreuzwinkel zwischen Werkzeug (15) und Werkstück erfolgt, wobei die Differenz zwischen dem ersten und dem zweiten Achskreuzwinkel mehr als 45° beträgt, bevorzugt mehr als 70°, und wobei die Differenz zwischen dem ersten und dem zweiten Achskreuzwinkel weniger als 135° beträgt, bevorzugt weniger als 110°, weiter bevorzugt weniger als 100°.

2. Verzahnmaschine nach Anspruch 1, wobei der Gegenhalter (4) beweglich und/oder lösbar verbindbar an einem ersten Schlitten (8) einer Linearachse (7) angeordnet ist, über welche er in Achsrichtung der Werkzeugaufnahme (3) gegenüber dieser verschieblich ist.

3. Verzahnmaschine nach Anspruch 1 oder 2, wobei der Gegenhalter (4) verschwenkbar an dem Bearbeitungskopf (6) der Verzahnmaschine angeordnet ist, wobei der Gegenhalter (4) bevorzugt durch das Verschwenken aus seiner Arbeitsstellung in die inaktive Stellung ein- oder wegklappbar ist.

4. Verzahnmaschine nach Anspruch 3, wobei der Gegenhalter (4) über eine Schwenk-Achse (91) verschwenkbar ist, welche in einer Ebene verläuft, die senkrecht auf der Achsrichtung der Werkzeugaufnahme (3) steht, wobei der Gegenhalter (4) bevorzugt in Richtung auf die Werkzeugaufnahme (3) einklappbar ist, oder wobei der Gegenhalter (4) über eine Schwenk-Achse verschwenkbar ist, welche parallel zur Achsrichtung der Werkzeugaufnahme (3) verläuft.

5. Verzahnmaschine nach einem der vorangegangenen Ansprüche, wobei alle Elemente des Gegenhalters (4) und seiner Lagerung in der inaktiven Stellung des Gegenhalters (4) einen vorgegebenen lichten Abstand zur Achse der Werkzeugaufnahme (3) aufweisen, wobei bevorzugt in der inaktiven Stellung des Gegenhalters (4) alle Störkonturen am Bearbeitungskopf (6) ausgehend von der Werkzeugaufnahme (3) in Achsrichtung einen vorgegebenen lichten Abstand zur Achse der Werkzeugaufnahme (3) aufweisen.

6. Verzahnmaschine nach einem der vorangegangenen Ansprüche, wobei der Gegenhalter (4) in seiner inaktiven Stellung in einer Aufnahmeöffnung (9) des Bearbeitungskopfes (6) aufgenommen ist, wobei der Gegenhalter (4) diese bevorzugt verschließt und/oder wobei der Gegenhalter (4) bevorzugt in dieser gelagert ist.

7. Verzahnmaschine nach einem der vorangegangenen Ansprüche, wobei sich der Gegenhalter (4) in seiner Arbeitsstellung auf einem Anschlagelement abstützt, wobei das Anschlagselement bevorzugt Kegelbolzen und/oder Kegelbolzenaufnahmen aufweist, und/oder wobei der Gegenhalter (4) in seiner Arbeitsstellung hydraulisch verspannbar ist.

8. Verzahnmaschine nach einem der vorangegangenen Ansprüche, wobei der Gegenhalter (4) über ein Schnellspannsystem lösbar mit dem Bearbeitungskopf verbindbar ist, wobei es sich bevorzugt über ein Nullpunktspannsystem handelt und/oder das Schnellspannsystem Kegelbolzen und/oder Kegelbolzenaufnahmen aufweist.

9. Verzahnmaschine nach einem der vorangegangenen Ansprüche mit einem automatischen Werkzeugwechsler und/oder mit einem Fräswerkzeug (14) und einem Wälzschälwerkzeug (15).

10. Verzahnmaschine nach einem der vorangegangenen Ansprüche, wobei die Steuerung eine Funktion zur Durchführung eines Verfahrens gemäß einem der Ansprüche 12 bis 14 aufweist.

11. Verfahren zur Herstellung mindestens eines verzahnten Werkstücks, insbesondere unter Verwendung einer Verzahnmaschine nach einem der vorangegangenen Ansprüche, wobei in einem ersten Bearbeitungsschritt und/oder Bearbeitungsmodus ein Werkstück mittels eines ersten Werkzeuges (14), welches zwischen einer Werkzeugaufnahme (3) und einem Gegenhalter (4) eingespannt ist, bearbeitet wird, und wobei in einem zweiten Bearbeitungsschritt und/oder Bearbeitungsmodus ein Werkstück mittels eines zweiten Werkzeuges (15), welches einseitig in der Werkzeugaufnahme (3) eingespannt ist, bearbeitet wird, wobei sich der Gegenhalter (4) während des zweiten Bearbeitungsschritts in einer inaktiven Stellung befindet oder von dem Bearbeitungskopf (6) abmontiert ist,
**dadurch gekennzeichnet,**
**dass** das Werkstück in einem der Bearbeitungsschritte und/oder Bearbeitungsmodi durch Fräsen bearbeitet wird und wobei das Werkstück in dem anderen Bearbeitungsschritt und/oder Bearbeitungsmodus durch Wälzschälen bearbeitet wird, und/oder
**dass** der erste Bearbeitungsschritt und/oder Bearbeitungsmodus mit einem ersten Achskreuzwinkel zwischen Werkzeug (14) und Werkstück erfolgt und der zweite Bearbeitungsschritt und/oder Bearbeitungsmodus mit einem zweiten Achskreuzwinkel zwischen Werkzeug (15) und Werkstück erfolgt, wobei die Differenz zwischen dem ersten und dem zweiten Achskreuzwinkel mehr als 45° beträgt, bevorzugt mehr als 70°, und wobei die Differenz zwischen dem ersten und dem zweiten Achskreuzwinkel weniger als 135° beträgt, bevorzugt weniger als 110°, weiter bevorzugt weniger als 100°.

12. Verfahren nach Anspruch 11, wobei der erste und der zweite Bearbeitungsschritt und/oder Bearbeitungsmodus zur Bearbeitung des gleichen Werkstückes (16) eingesetzt werden, oder wobei der erste und der zweite Bearbeitungsschritt und/oder Bearbeitungsmodus zur Bearbeitung unterschiedlicher Werkstücke eingesetzt werden.

13. Verfahren nach einem der Ansprüche 11 oder 12, wobei der erste und der zweite Bearbeitungsschritt zur Bearbeitung zweier unterschiedlicher Verzahnungen (17, 18) eines Werkstückes (16) eingesetzt werden, wobei bevorzugt eine Fräsbearbeitung zur Bearbeitung einer ersten Verzahnung (17) und eine Wälzschälbearbeitung zur Bearbeitung einer zweiten Verzahnung (18) durchgeführt werden, und/oder wobei die erste Verzahnung (17) bevorzugt einen größeren Durchmesser aufweist als die zweite Verzahnung (18) und/oder eine Störkontur für die zweite Verzahnung besteht und/oder wobei es sich bei den Verzahnungen (17, 18) um Stirnradverzahnungen handelt.

14. Verfahren nach einem der Ansprüche 11 oder 12, wobei der erste und der zweite Bearbeitungsschritt nacheinander zur Bearbeitung der gleichen Verzahnung (22) eines Werkstückes eingesetzt werden, wobei bevorzugt zunächst eine Schruppbearbeitung und darauffolgend eine Schlichtbearbeitung durchgeführt werden und/oder wobei es sich bevorzugt bei der Verzahnung um eine Schneckenverzahnung handelt, insbesondere eine Schneckenverzahnung eines Antriebselementes eines Lenkantriebs eines Fahrzeugs.

15. Verwendung einer Verzahnmaschine, insbesondere einer Verzahnmaschine nach einem der Ansprüche 1 bis 9, mit einer Werkstückaufnahme (1) und einer Werkzeugaufnahme (3), welche jeweils durch einen Antrieb (5, 5') in Rotation versetzbar sind, wobei die Werkzeugaufnahme (3) an einem Bearbeitungskopf (6) angeordnet ist, welcher über eine oder mehrere Bewegungsachsen der Verzahnmaschine relativ zur Werkstückaufnahme (1) verfahrbar ist, um ein in der Werkstückaufnahme (1) aufgenommenes Werkstück durch ein in der Werkzeugaufnahme (3) aufgenommenes Werkzeug (14, 15) verzahnzubearbeiten, wobei die Werkzeugaufnahme (3) einen Gegenhalter (4) aufweist, wobei der Gegenhalter (4) über eine Bewegungsachse (91) aus seiner Arbeitsstellung in eine inaktive Stellung beweglich ist und/oder lösbar verbindbar an dem Bearbeitungskopf (6) der Verzahnmaschine angeordnet ist,
in einem Verfahren, bei welchem in einem ersten Bearbeitungsschritt und/oder Bearbeitungsmodus ein Werkstück mittels eines ersten Werkzeuges (14), welches zwischen einer Werkzeugaufnahme (3) und dem Gegenhalter (4) eingespannt ist, bearbeitet wird, und wobei in einem zweiten Bearbeitungsschritt und/oder Bearbeitungsmodus ein Werkstück mittels eines zweiten Werkzeuges (15), welches einseitig in der Werkzeugaufnahme eingespannt ist, bearbeitet wird, wobei sich der Gegenhalter (4) während des zweiten Bearbeitungsschritts in einer inaktiven Stellung befindet oder von dem Bearbeitungskopf (6) abmontiert ist, insbesondere Verwendung in einem Verfahren nach einem der Ansprüche 11 bis 14,
**dadurch gekennzeichnet,**
**dass** das Werkstück in einem der Bearbeitungsschritte und/oder Bearbeitungsmodi durch Fräsen bearbeitet wird und wobei das Werkstück in dem anderen Bearbeitungsschritt und/oder Bearbeitungsmodus durch Wälzschälen bearbeitet wird, und/oder
**dass** der erste Bearbeitungsschritt und/oder Bearbeitungsmodus mit einem ersten Achskreuzwinkel zwischen Werkzeug (14) und Werkstück erfolgt und der zweite Bearbeitungsschritt und/oder Bearbeitungsmodus mit einem zweiten Achskreuzwinkel zwischen Werkzeug (15) und Werkstück erfolgt, wobei die Differenz zwischen dem ersten und dem zweiten Achskreuzwinkel mehr als 45° beträgt, bevorzugt mehr als 70°, und wobei die Differenz zwischen dem ersten und dem zweiten Achskreuzwinkel weniger als 135° beträgt, bevorzugt weniger als 110°, weiter bevorzugt weniger als 100°.

## Claims

1. Gear manufacturing machine, comprising a workpiece holder (1) and a tool holder (3), which can each be caused to rotate by means of a drive (5, 5'), wherein the tool holder (3) is arranged on a machining head (6), which can be moved relative to the workpiece holder (1) by one or a plurality of motion axes of the gear manufacturing machine for gear manufacturing machining a workpiece held in the workpiece holder (1) by means of a tool (14, 15) held in the tool holder (3), wherein the tool holder (3) comprises a counterholder (4), wherein the counterholder (4) is movable by a motion axis (91) from its working position to an inactive position and/or is arranged on the machining head (6) of the gear manufacturing machine in a releasably connectable manner,
and comprising a control unit which comprises a function for performing a method in which in a first machining step and/or machining mode, a workpiece is machined by means of a first tool (14) clamped between a tool holder (3) and a counterholder (4), and wherein, in a second machining step and/or machining mode, a workpiece is machined by means of a second tool (15) clamped in the tool holder on one side thereof, wherein the counterholder (4) occupies an inactive position or is dismounted from the machining head (6) during the second machining step,
**characterized in that**
the workpiece is machined by milling in one of the machining steps and/or machining modes, and wherein the workpiece is machined by skiving in the other machining step and/or machining mode, and/or
the first machining step and/or machining mode takes place with a first axis intersection angle between the tool (14) and the workpiece, and the second machining step and/or machining mode takes place with a second axis intersection angle between the tool (15) and the workpiece, wherein the difference between the first and the second axis intersection angle is greater than 45°, preferably greater than 70°, and wherein the difference between the first and the second axis intersection angle is less than 135°, preferably less than 110°, further preferred less than 100°.

2. Gear manufacturing machine according to claim 1, wherein the counterholder (4) is arranged in a movable and/or releasably connectable manner on a first slide (8) of a linear axis (7) by which it is displaceable relative to the tool holder (3) in the axial direction of the latter.

3. Gear manufacturing machine according to claim 1 or 2, wherein the counterholder (4) is pivotably arranged on the machining head (6) of the gear manufacturing machine, wherein the counterholder (4) can preferably be folded in or folded away by pivoting from its working position to the inactive position.

4. Gear manufacturing machine according to claim 3, wherein the counterholder (4) is pivotable by a pivot axis (91) extending in a plane perpendicular to the axial direction of the tool holder (3), wherein the counterholder (4) can preferably be folded in in the direction of the tool holder (3), or wherein the counterholder (4) is pivotable by a pivot axis extending parallel to the axial direction of the tool holder (3).

5. Gear manufacturing machine according to one of the preceding claims, wherein, at the inactive position of the counterholder (4), all the elements of the counterholder (4) and its support exhibit a predetermined clear distance to the axis of the tool holder (3), wherein, at the inactive position of the counterholder (4), preferably all the interfering contours on the machining head (6) exhibit, starting from the tool holder (3) in the axial direction, a predetermined clear distance to the axis of the tool holder (3).

6. Gear manufacturing machine according to one of the preceding claims, wherein the counterholder (4), when occupying its inactive position, is accommodated in an accommodation opening (9) of the machining head (6), wherein the counterholder (4) preferably closes this accommodation opening and/or wherein the counterholder (4) is preferably supported therein.

7. Gear manufacturing machine according to one of the preceding claims, wherein the counterholder (4), when occupying its working position, rests on a stop element, wherein the stop element comprises preferably tapered pins and/or tapered pin receptacles, and/or wherein the counterholder (4) can be hydraulically clamped at its working position.

8. Gear manufacturing machine according to one of the preceding claims, wherein the counterholder (4) is releasably connectable to the machining head via a quick-clamping system, wherein the latter preferably is a zero-point clamping system and/or the quick-clamping system comprises tapered pins and/or tapered pin receptacles.

9. Gear manufacturing machine according to one of the preceding claims, comprising an automatic tool changer and/or a milling tool (14) and a skiving tool (15).

10. Gear manufacturing machine according to one of the preceding claims, wherein the control unit comprises a function for carrying out a method according to one of the claims 12 to 14.

11. Method of manufacturing at least one toothed workpiece, in particular by use of a gear manufacturing machine according to one of the preceding claims, wherein, in a first machining step and/or machining mode, a workpiece is machined by means of a first tool (14) clamped between a tool holder (3) and a counterholder (4), and wherein, in a second machining step and/or machining mode, a workpiece is machined by means of a second tool (15) clamped in the tool holder (3) on one side thereof, wherein the counterholder (4) occupies an inactive position or is dismounted from the machining head (6) during the second machining step,
**characterized in that**
the workpiece is machined by milling in one of the machining steps and/or machining modes, and wherein the workpiece is machined by skiving in the other machining step and/or machining mode, and/or
the first machining step and/or machining mode takes place with a first axis intersection angle between the tool (14) and the workpiece, and the second machining step and/or machining mode takes place with a second axis intersection angle between the tool (15) and the workpiece, wherein the difference between the first and the second axis intersection angle is greater than 45°, preferably greater than 70°, and wherein the difference between the first and the second axis intersection angle is less than 135°, preferably less than 110°, further preferred less than 100°.

12. Method according to claim 11, wherein the first and the second machining step and/or machining mode are used for machining the same workpiece (16), or wherein the first and the second machining step and/or machining mode are used for machining different workpieces.

13. Method according to one of the claims 11 or 12, wherein the first and the second machining step are used for machining two different toothings (17, 18) of a workpiece (16), wherein the machining carried out is preferably milling for machining a first toothing (17) and skiving for machining a second toothing (18), and/or wherein the diameter of the first toothing (17) is preferably larger than that of the second toothing (18) and/or an interfering contour exists for the second toothing and/or wherein the toothings (17, 18) are spur gear toothings.

14. Method according to one of the claims 11 or 12, wherein the first and the second machining step are used in succession for machining the same toothing (22) of a workpiece, wherein, preferably, the machining carried out first is roughing and the machining carried out subsequently is finishing, and/or wherein the toothing is preferably a worm toothing, in particular a worm toothing of a drive element of a steering drive of a vehicle.

15. Use of a gear manufacturing machine, in particular a gear manufacturing machine according to one of claims 1 to 9, which comprises a workpiece holder (1) and a tool holder (3), which can each be caused to rotate by means of a drive (5, 5'), wherein the tool holder (3) is arranged on a machining head (6), which can be moved relative to the workpiece holder (1) by one or a plurality of motion axes of the gear manufacturing machine for gear manufacturing machining a workpiece held in the workpiece holder (1) by means of a tool (14, 15) held in the tool holder (3), wherein the tool holder (3) comprises a counterholder (4), wherein the counterholder (4) is movable by a motion axis (91) from its working position to an inactive position and/or is arranged on the machining head (6) of the gear manufacturing machine in a releasably connectable manner, in a method in which in a first machining step and/or machining mode, a workpiece is machined by means of a first tool (14) clamped between a tool holder (3) and a counterholder (4), and wherein, in a second machining step and/or machining mode, a workpiece is machined by means of a second tool (15) clamped in the tool holder on one side thereof, wherein the counterholder (4) occupies an inactive position or is dismounted from the machining head (6) during the second machining step, in particular use in a method according to one of the claims 11 to 14,
**characterized in that**
the workpiece is machined by milling in one of the machining steps and/or machining modes, and wherein the workpiece is machined by skiving in the other machining step and/or machining mode, and/or
the first machining step and/or machining mode takes place with a first axis intersection angle between the tool (14) and the workpiece, and the second machining step and/or machining mode takes place with a second axis intersection angle between the tool (15) and the workpiece, wherein the difference between the first and the second axis intersection angle is greater than 45°, preferably greater than 70°, and wherein the difference between the first and the second axis intersection angle is less than 135°, preferably less than 110°, further preferred less than 100°.

## Revendications

1. Machine à tailler les engrenages comprenant un logement de pièce (1) et un logement d'outil (3), qui peuvent respectivement être mis en rotation par un entraînement (5, 5'), le logement d'outil (3) étant disposé sur une tête d'usinage (6), qui peut être déplacée par rapport au logement de pièce (1) sur un ou plusieurs axes de déplacement de la machine à tailler les engrenages, pour effectuer un usinage de denture d'une pièce reçue dans le logement de pièce (1) par un outil (14, 15) reçu dans le logement d'outil (3), le logement d'outil (3) comportant un bras support (4), le bras support (4) étant mobile sur un axe de déplacement (91) de sa position de travail à une position inactive et/ou étant disposé de façon à pouvoir être relié de manière libérable à la tête d'usinage (6) de la machine à tailler les engrenages,
et comprenant un dispositif de commande, qui présente une fonction pour exécuter un procédé, dans lequel, dans une première étape d'usinage et/ou un premier mode d'usinage, une pièce est usinée au moyen d'un premier outil (14), qui est serré entre un logement d'outil (3) et le bras support (4), et une pièce étant usinée dans une seconde étape d'usinage et/ou un second mode d'usinage au moyen d'un second outil (15), qui est serré d'un côté dans le logement d'outil, le bras support (4) se trouvant dans une position inactive ou étant démonté de la tête d'usinage (6) pendant la seconde étape d'usinage, **caractérisée en ce que**
la pièce est usinée par fraisage dans une des étapes d'usinage et/ou un des modes d'usinage et la pièce étant usinée par taillage par développante dans l'autre étape d'usinage et/ou mode d'usinage, et/ou
**en ce que** la première étape d'usinage et/ou le premier mode d'usinage est effectué(e) avec un premier angle de croisement des axes entre l'outil (14) et la pièce et la seconde étape d'usinage et/ou le second mode d'usinage est effectué(e) avec un second angle de croisement des axes entre l'outil (15) et la pièce, la différence entre le premier et le second angle de croisement des axes étant supérieure à 45°, de préférence supérieure à 70°, et la différence entre le premier et le second angle de croisement des axes étant inférieure à 135°, de préférence inférieure à 110°, de préférence encore inférieure à 100°.

2. Machine à tailler les engrenages selon la revendication 1, dans laquelle le bras support (4) est disposé mobile sur et/ou de façon à pouvoir être relié de manière détachable à un chariot (8) d'un axe linéaire (7), par le biais duquel il peut coulisser dans la direction axiale du logement d'outil (3) par rapport à celui-ci.

3. Machine à tailler les engrenages selon la revendication 1 ou 2, dans laquelle le bras support (4) est disposé pivotant sur la tête d'usinage (6) de la machine à tailler les engrenages, le bras support (4) pouvant de préférence être escamoté ou rabattu par le pivotement de sa position de travail à la position inactive.

4. Machine à tailler les engrenages selon la revendication 3, dans laquelle le bras support (4) peut pivoter sur un axe de pivotement (91), qui s'étend dans un plan qui est perpendiculaire à la direction axiale du logement d'outil (3), le bras support (4) pouvant de préférence être escamoté en direction du logement d'outil (3), ou le bras support (4) pouvant pivoter sur un axe de pivotement qui s'étend parallèlement à la direction axiale du logement d'outil (3).

5. Machine à tailler les engrenages selon l'une des revendications précédentes, dans laquelle tous les éléments du bras support (4) et de son logement présentent, dans la position inactive du bras support (4), un écartement prédéfini par rapport à l'axe du logement d'outil (3), tous les contours perturbateurs sur la tête d'usinage (6), à partir du logement d'outil (3) dans la direction axiale, présentant de préférence, dans la position inactive du bras support (4), un écartement prédéfini par rapport à l'axe du logement d'outil (3).

6. Machine à tailler les engrenages selon l'une des revendications précédentes, dans laquelle le bras support (4), dans sa position inactive, est reçu dans une ouverture de réception (9) de la tête d'usinage (6), le bras support (4) fermant de préférence celle-ci et/ou le bras support (4) étant de préférence monté dans celle-ci.

7. Machine à tailler les engrenages selon l'une des revendications précédentes, dans laquelle le bras support (4) s'appuie, dans sa position de travail, sur un élément de butée, l'élément de butée présentant de préférence des boulons coniques et/ou des logements de boulon conique, et/ou dans laquelle le bras support (4) peut être serré de manière hydraulique dans sa position de travail.

8. Machine à tailler les engrenages selon l'une des revendications précédentes, dans laquelle le bras support (4) peut être relié de manière libérable à la tête d'usinage par le biais d'un système de serrage rapide, celui-ci étant de préférence un système de serrage point zéro et/ou le système de serrage rapide comportant des boulons coniques et/ou des logements de boulon conique.

9. Machine à tailler les engrenages selon l'une des revendications précédentes, comprenant un changeur d'outil automatique et/ou comprenant un outil de fraisage (14) et un outil de taillage par développante (15).

10. Machine à tailler les engrenages selon l'une des revendications précédentes, dans laquelle le dispositif de commande présente une fonction pour exécuter un procédé selon l'une des revendications 12 à 14.

11. Procédé de fabrication d'au moins une pièce dentée, en particulier au moyen d'une machine à tailler les engrenages selon l'une des revendications précédentes, dans lequel, dans une première étape d'usinage et/ou un premier mode d'usinage, une pièce est usinée au moyen d'un premier outil (14), qui est serré entre un logement d'outil (3) et un bras support (4), et dans lequel, dans une seconde étape d'usinage et/ou un second mode d'usinage, une pièce est usinée au moyen d'un second outil (15), qui est serré d'un côté dans le logement d'outil (3), le bras support (4) se trouvant dans une position inactive ou étant démonté de la tête d'usinage (6) pendant la seconde étape d'usinage, **caractérisé en ce que**
la pièce est usinée par fraisage dans une des étapes d'usinage et/ou un des modes d'usinage et la pièce étant usinée par taillage par développante dans l'autre étape d'usinage et/ou mode d'usinage, et/ou
**en ce que** la première étape d'usinage et/ou le premier mode d'usinage est effectué(e) avec un premier angle de croisement des axes entre l'outil (14) et la pièce et la seconde étape d'usinage et/ou le second mode d'usinage est effectué(e) avec un second angle de croisement des axes entre l'outil (15) et la pièce, la différence entre le premier et le second angle de croisement des axes étant supérieure à 45°, de préférence supérieure à 70°, et la différence entre le premier et le second angle de croisement des axes étant inférieure à 135°, de préférence inférieure à 110°, de préférence encore inférieure à 100°.

12. Procédé selon la revendication 11, dans lequel la première et la seconde étape d'usinage et/ou le premier et le second mode d'usinage sont utilisé(e)s pour usiner la même pièce (16), ou dans lequel la première et la seconde étape d'usinage et/ou le premier et le second mode d'usinage sont utilisé(e)s pour usiner différentes pièces.

13. Procédé selon l'une des revendications 11 ou 12, dans lequel la première et la seconde étape d'usinage sont utilisées pour usiner deux dentures (17, 18) différentes d'une pièce (16), dans lequel, de préférence, un fraisage est effectué pour usiner une première denture (17) et un taillage par développante pour usiner une seconde denture (18), et/ou dans lequel la première denture (17) présente de préférence un diamètre supérieur à la seconde denture (18) et/ou un contour perturbateur existant pour la seconde denture et/ou les dentures (17, 18) étant des dentures de roue droite.

14. Procédé selon l'une des revendications 11 ou 12, dans lequel la première et la seconde étape d'usinage sont utilisées l'une après l'autre pour usiner la même denture (22) d'une pièce, un dégrossissage d'abord et un finissage ensuite étant effectués et/ou la denture étant de préférence une denture hélicoïdale, en particulier une denture hélicoïdale d'un élément d'entraînement d'une commande de direction d'un véhicule.

15. Utilisation d'une machine à tailler les engrenages, en particulier une machine à tailler les engrenages selon l'une des revendications 1 à 9, comprenant un logement de pièce (1) et un logement d'outil (3), qui peuvent respectivement être mis en rotation par un entraînement (5, 5'), le logement d'outil (3) étant disposé sur une tête d'usinage (6), qui peut être déplacée par rapport au logement de pièce (1) sur un ou plusieurs axes de déplacement de la machine à tailler les engrenages, pour effectuer un usinage de denture d'une pièce reçue dans le logement de pièce (1) par un outil (14, 15) reçu dans le logement d'outil (3), le logement d'outil (3) comportant un bras support (4), le bras support (4) étant mobile sur un axe de déplacement (91) de sa position de travail à une position inactive et/ou étant disposé de façon à pouvoir être relié de manière libérable à la tête d'usinage (6) de la machine à tailler les engrenages, dans un procédé, dans lequel, dans une première étape d'usinage et/ou un premier mode d'usinage, une pièce est usinée au moyen d'un premier outil (14) qui est serré entre un logement d'outil (3) et le bras support (4), et une pièce étant usinée dans une seconde étape d'usinage et/ou un second mode d'usinage au moyen d'un second outil (15), qui est serré d'un côté dans le logement d'outil, le bras support (4) se trouvant dans une position inactive ou étant démonté de la tête d'usinage (6) pendant la seconde étape d'usinage, en particulier utilisation dans un procédé selon l'une des revendications 11 à 14, **caractérisée en ce que**
la pièce est usinée par fraisage dans une des étapes d'usinage et/ou un des modes d'usinage et la pièce étant usinée par taillage par développante dans l'autre étape d'usinage et/ou mode d'usinage, et/ou
**en ce que** la première étape d'usinage et/ou le premier mode d'usinage est effectué(e) avec un premier angle de croisement des axes entre l'outil (14) et la pièce et la seconde étape d'usinage et/ou le second mode d'usinage est effectué(e) avec un second angle de croisement des axes entre l'outil (15) et la pièce, la différence entre le premier et le second angle de croisement des axes étant supérieure à 45°, de préférence supérieure à 70°, et la différence entre le premier et le second angle de croisement des axes étant inférieure à 135°, de préférence inférieure à 110°, de préférence encore inférieure à 100°.
